# EUROPÄISCHE PATENTANMELDUNG

(11) **EP 4 130 564 A1**
(43) Veröffentlichungstag der Anmeldung: **08.02.2023**
(21) Anmeldenummer: 22183517.6
(22) Anmeldetag: 07.07.2022
(51) Int. Cl.: F21V 8/00

(54) **DISPLAY UND DISPLAYSUBSTRAT MIT MIKROSTRUKTURELEMENTEN**

(30) Priorität: 03.08.2021 DE 102021120129
(71) Anmelder: Marquardt GmbH, 78604 Rietheim-Weilheim (DE)
(72) Erfinder: Carvalho Machado, Ilomar, 78056 Villingen-Schwenningen (DE); Dyroff, Holger, 85540 Haar (DE); Käfer, Wolfgang, 78166 Donaueschingen (DE); Przygoda, Kamill, 78532 Tuttlingen (DE); Bucelli, Mario, 78073 Bad Dürrheim (DE)
(74) Vertreter: Staeger & Sperling Partnerschaftsgesellschaft mbB

(57) **Zusammenfassung**

Die Erfindung betrifft ein Displaysubstrat (1) das als plattenförmiger Lichtleiter aus einem zumindest teiltransparenten Lichtleitmaterial ausgebildet ist und wobei der plattenförmiger Lichtleiter über einen Lichteinkopplungsabschnitt (10) und eine als Sichtfläche (20) ausgebildete Oberfläche zum Anzeigen eines bestimmten Symbols, Bildelementes und/oder eines Hinweise (S) verfügt, wobei hierzu in einem gegenüberliegend der Sichtfläche (20) rückwärtigen Bereich (25) eine Vielzahl von Mikrostrukturformen (30) in die Oberfläche im rückwärtigen Bereich (25) des Lichtleiters eingebracht sind, die jeweils in einer vorbestimmten geometrischen Größe, Form und Anordnung vorgesehen sind, so dass beim Betrachten der Sichtfläche (20) je nachdem ob der plattenförmige Lichtleiter mittels Leuchtmittel (40) über den Lichteinkopplungsabschnitt (10) beleuchtet wird oder nicht, auf der Sichtfläche (20) unter zumindest einem bestimmten Winkelbereich α relativ zur Lotrechten (L) der Oberfläche betrachtet, das Symbol, das Bildelement oder der Hinweise (S) dargestellt wird oder nicht.

## Beschreibung

Diese Erfindung betrifft ein Display und Displaysubstrat für eine Anzeigeeinrichtung mit Mikrostrukturelementen, insbesondere zur temporären Anzeige von Symbolen, Hinweisen oder Informationen an einen Betrachter.

Im der Stand der Technik gibt es diverse unterschiedliche Konzepte zu Anzeigeeinrichtungen, die ausgebildet sind einen dynamisch veränderlichen Inhalt darzustellen. Bekannte Lösungen sind zum Beispiel die OLED Technik oder Elektrolumineszenz-Techniken. Eine organische Leuchtdiode ist ein leuchtendes Dünnschichtbauelement aus organischen halbleitenden Materialien, das sich von den anorganischen Leuchtdioden (LED) dadurch unterscheidet, dass die elektrische Stromdichte und Leuchtdichte geringer und keine einkristallinen Materialien erforderlich sind. Im Vergleich zu herkömmlichen (anorganischen) Leuchtdioden lassen sich organische Leuchtdioden daher in Dünnschichttechnik kostengünstiger herstellen, ihre Lebensdauer und Lichtausbeute sind jedoch noch geringer als die herkömmlicher Leuchtdioden. Die OLED-Technik wird für Bildschirme in Smartphones, Tablet-Computern wie auch in größerflächigen Anzeigen eingesetzt.

In Fahrzeuganwendungen besteht ein besonderer Bedarf für eine Darstellung von Anzeigesymbolen, Bildzeichen oder Hinweisen an den unterschiedlichsten Orten und Positionen innerhalb des Fahrzeugs. Das Anbringen von aufwändigen und teuren Displays, die ggf. auch elektronisch aufwändig angesteuert werden müssten und mit Energie versorgt werden müssen, scheidet dafür aus. Somit kommt eine Vielzahl der herkömmlichen und bekannten Lösungen für solche Anwendungen nicht in Frage.

Aus der DE 10 2020 002 053 B3 ist ein Verfahren zur Beeinflussung der Lichtausbreitungsrichtungen mindestens einer selbstleuchtenden oder beleuchteten Fläche bekannt, wobei die besagte Fläche Licht wenigstens teilweise unterschiedlicher Wellenlängenbereiche in jeweils unterschiedliche Raumrichtungen aussendet, wobei sich die Wellenlängenbereiche mindestens in ihrer Peak-Wellenlänge unterscheiden, und wobei in Betrachtungsrichtung vor der besagten Fläche ein schaltbarer Farbkonverter angeordnet ist, der durch Deaktivieren oder Aktivieren einen ersten oder zweiten Sichtmodus bewirkt, so dass ein Wellenlängenbereich transmittiert und ein Wellenlängenbereich absorbiert wird, wodurch das von der Fläche ausgehende Licht lediglich aus einer Raumrichtung wahrnehmbar ist. Nachteilig ist dabei, dass man zur Anzeige jeweils einen Farbkonverter benötigt und die Anzeige auch Wellenlängenabhängig ist. Insgesamt ist die Implementierung daher für die einfache Anzeige von Hinweisen, Symbolen und Bildzeichen zu aufwändig.

Ferner besteht auch ein Interesse daran, dass die Symbole im Fahrzeug nur unter bestimmten Blickrichtungen, zum Beispiel nur vom Fahrersitz aus betrachtet werden und erkannt werden, während zum Beispiel der Beifahrer das angezeigte Symbol nicht erkennen kann oder sogar nicht erkennen soll.

Aus der DE 10 2014 003298 A1 ist ein Verfahren zur wahlweisen Einschränkung der Erkennbarkeit von Bildern bekannt, die auf einem Bildschirm dargestellt werden, bei welchem ein optisches Element in Betrachtungsrichtung vor dem Bildschirm angeordnet ist, welches für das von dem Bildschirm ausgehende Licht zu mindestens 70% transparent ist, und welches für aus Leuchtmittel seitlich in Winkeln von über 70 Grad gegenüber seiner Flächennormale einfallendes Licht in mindestens einen eingeschränkten Winkelbereich W1, W2, ... derart ablenkt, dass eine Abstrahlung nur in gewünschten Raumrichtungen erfolgt. Ferner ist vorgesehen, dass bei ausgeschalteten Leuchtmittel das auf dem Bildschirm dargestellte Bild jedoch ohne Einschränkung aus allen von dem Bildschirm beleuchteten Winkel sichtbar ist.

Die DE 10 2019 006 339 A1 betrifft ein Verfahren zur Verstärkung des Sichtschutzeffektes eines Bildschirms, umfassend die folgenden Schritte: Darstellung eines Bildinhaltes auf einem Bildschirm, wobei der Bildschirm über einen Sichtschutzeffekt verfügt, der die Betrachtung nur aus einem eingeschränkten Winkelbereich erlaubt. Allerdings ist auch diese Lösung in der technischen Umsetzung komplex und aufwändig.

Vor diesem Hintergrund liegt der vorliegenden Erfindung die technische Problemstellung zugrunde, eine verbesserte konzeptionelle Lösung vorzusehen, bei der es auf kostengünstige und vergleichsweise einfache Weise möglich ist, Bildelemente, Symbole und Hinweise an gewünschten Raumpositionen temporär anzuzeigen und ferner gleichzeitig eine Lösung vorzusehen, dass diese Bildelemente, Symbole und Hinweise dann nur in einem eingeschränkten Winkelbereich sichtbar sind. Anders ausgedrückt bedeutet dies, dass es die Aufgabe der vorliegenden Erfindung ist, die Darstellung einer temporär sichtbaren Symbolik mit hoher Konturschärfe und gut sichtbar unter allen Lichtverhältnisbedingungen und verschiedenen relativen Winkeln des Betrachters zum Symbol zu ermöglichen.

Ein Grundgedanke der vorliegenden Erfindung sieht dabei vor, einen plattenförmigen Lichtleiter spezifisch mit einer Vielzahl von Mikrostrukturformen oder Mikrostrukturelementen auszubilden, die gemeinsam eine Lichtstreuung zu einer Betrachtungsseite des Lichtleiters in Form eines anzuzeigenden Symbols oder Bildelements bewirken.

Erfindungsgemäß wird hierzu ein Displaysubstrat vorgesehen, das als plattenförmiger Lichtleiter aus einem zumindest teiltransparenten Lichtleitmaterial ausgebildet ist, wobei der plattenförmiger Lichtleiter über einen Lichteinkopplungsabschnitt und eine als Sichtfläche ausgebildete Oberfläche zum Anzeigen eines bestimmten Symbols, Bildelementes und/oder eines Hinweises verfügt, wobei hierzu in einem gegenüberliegend der Sichtfläche rückwärtigen Bereich (Rückseite) eine Vielzahl von Mikrostrukturformen und/oder Mikrostrukturelementen in die Oberfläche im rückwärtigen Bereich des Lichtleiters eingebracht sind, die jeweils in einer vorbestimmten geometrischen Größe, Form und Anordnung vorgesehen sind, so dass beim Betrachten der Sichtfläche je nachdem ob der plattenförmige Lichtleiter mittels Leuchtmittel über den Lichteinkopplungsabschnitt beleuchtet wird oder nicht, auf der Sichtfläche unter zumindest einem bestimmten Winkelbereich α (relativ zur Lotrechten der Oberfläche betrachtet), das entsprechend erzeugte Symbol, das Bildelement oder der Hinweise (S) dargestellt wird oder nicht.

In einer vorteilhaften Ausführungsform der Erfindung ist vorgesehen, dass im nicht über den Lichteinkopplungsabschnitt beleuchteten Zustand des plattenförmigen Lichtleiters keine durch die Mikrostrukturformen gebildete Strukturen oder Symbole auf der Sichtseite durch einen Betrachter in jedwedem Betrachtungsabstand erkennbar sind. Dies hat den Vorteil, dass der Betrachter nur dann ein Symbol erkennen kann, wenn eine Beleuchtung stattfindet und nicht bei gewissen Lichtverhältnissen doch irgendwie eine Struktur erkennt und als Symbol deutet.

Hierzu ist insbesondere vorgesehen dass das Raster, Muster und die Form, insbesondere die Tiefe der Mikrostrukturformen in der Oberfläche in der Größenordnung von 5 µm bis 100 µm liegt. Besonders vorteilhaft hat sich eine Kombination gezeigt, bei der die Breite der Mikrostrukturformen zwischen 25 µm und 100 µm und die Tiefe bei ca. 40 bis 60 µm liegt, während das durch die Vielzahl der Mikrostrukturformen gebildete Rastermaß im Bereich zwischen zwischen 25 µm und 100 µm liegt.

Ebenfalls vorteilhaft ist es, wenn wenigstens eine Seitenkante des plattenförmigen Lichtleiters als Lichteinkopplungsabschnitt vorgesehen ist, um über wenigstens diese Seitenkante Licht von einem Leuchtmittel in den Lichtleiter einzukoppeln.

In einer ebenfalls vorteilhaften Ausführungsform der Erfindung ist vorgesehen, dass die Mikrostrukturformen jeweils eine entsprechend geformte und/oder orientierte Streufläche ausbilden, um das vom Lichteinkopplungsabschnitt eingekoppelte Licht bestimmungsgemäß in Richtung der Sichtfläche abzulenken oder zu streuen, wobei die Form und/oder Orientierung der Streufläche dabei so gewählt ist, dass das eingekoppelte Licht vorzugsweise unter einem bestimmten Winkel α gegenüber der Lotrechten der Sichtseite aus der Sichtseite austritt.

Ebenfalls vorteilhaft ist es, wenn die Mikrostrukturformen in einem vorbestimmten, insbesondere symmetrischen Muster in Reihen und/oder Spalten, vorzugsweise räumlich begrenzt durch die des anzuzeigenden Symbols definierte Außenkontur ausgebildet sind. Somit können die ausgewählten Bereiche mit Mikrostrukturformen, entsprechend dem Symbol, das an der Sichtseite dargestellt werden sollen, korrespondierend auf der Rückseite als Rasterbild eingeprägt sein, wobei die Rasterposition die Mikrostrukturformen sind.

In einer besonders bevorzugten Ausgestaltung der Erfindung ist vorgesehen, dass die Mikrostrukturformen als dreidimensionale Mikroausnehmungen in der der Sichtseite gegenüberliegenden Rückseite ausgebildet sind.

Weiter vorteilhaft ist es, wenn die Mikrostrukturelemente mit einer runden, halbrunden, teilzylinderförmigen oder tunnelförmigen Form ausgebildet sind, die jeweils zumindest eine gegenüber dem Lichteinkopplungsabschnitt im Wesentlichen gekrümmte, vorzugsweise die mit einer hybriden Form aus pyramidalen, prismatischen oder einer daraus kombinierten Form ausgebildet sind, die jeweils zumindest eine gegenüber dem Lichteinkopplungsabschnitt im Wesentlichen gekrümmte oder gewölbte Streufläche, insbesondere konvex gewölbte Streufläche ausbilden, an denen das eingekoppelte Licht jeweils in einen definierten Streuwinkel zur Sichtfläche hin gestreut wird.

In einer ebenfalls vorteilhaften Ausführungsform der Erfindung ist vorgesehen, dass die jeweils wenigstens eine gekrümmte Streufläche ein Mantelflächenabschnitt eines Zylinders, einer Teilkugel oder einer Tunnelkuppel ist, der zu einer Streuung des Lichts aus der Oberfläche auf der Sichtseite zur Anzeige des durch die Mikrostrukturelemente erzeugten Symbols unter einem Betrachtungswinkel α von bis zu 80° zur Lotrechten L erkennbar ist.

Ein weiterer Aspekt der vorliegenden Erfindung betrifft neben dem beschriebenen Displaysubstrat auch eine Displayanordnung bestehend aus wenigstens zwei oder mehreren übereinander gestapelten Displaysubstraten, wobei die jeweils in dem Lichtleiter des betroffenen Displaysubstrats ausgebildeten Mikrostrukturelemente in einer spezifischen (jeweils anderen) Anordnung vorgesehen sind, dass jeweils ein anderes, insbesondere auch aus mehreren Symbolen überlagertes Symbol an der Sichtseite des obersten Displaysubstrats angezeigt werden kann, je nachdem welche der im Stapel angeordneten Displaysubstraten beleuchtet wird. So kann ausgewählt aus dem Stapel z. B. nur ein ganz bestimmtes Displaysubstrat beleuchtet werden, um das durch dessen Mikrostrukturelemente gebildete Symbol anzuzeigen. Alternativ können auch zwei oder mehrere Displaysubstrate gleichzeitig beleuchtet werden, um die durch die entsprechenden Mikrostrukturelemente gebildeten Symbole optisch zu überlagern oder nebeneinander anzuzeigen, je nach relativer örtlicher Ausprägung der Mikrostrukturelemente in dem jeweiligen Displaysubstrat.

Ein noch weiterer Aspekt der vorliegenden Erfindung betrifft neben der Displayanordnung auch ein Display umfassend ein Displaysubstrat oder eine wie beschriebene Displayanordnung.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine schematische Prinzipskizze, die das Konzept der Erfindung mit einem Displaysubstrat erläutert;
- Fig. 2: eine Ansicht einer erfindungsgemäßen Displayanordnung aus mehreren übereinander geschichteten Displaysubstraten;
- Fig. 3: ein schematischer Ausschnitt eines Bereiches eines Displaysubstrate mit einer Vielzahl von Mikrostrukturformen, die in einem beispielhaften Raster in Reihen und Spalten angeordnet sind und
- Fig. 4: beispielhafte Formen erfindungsgemäßer Mikrostrukturformen.

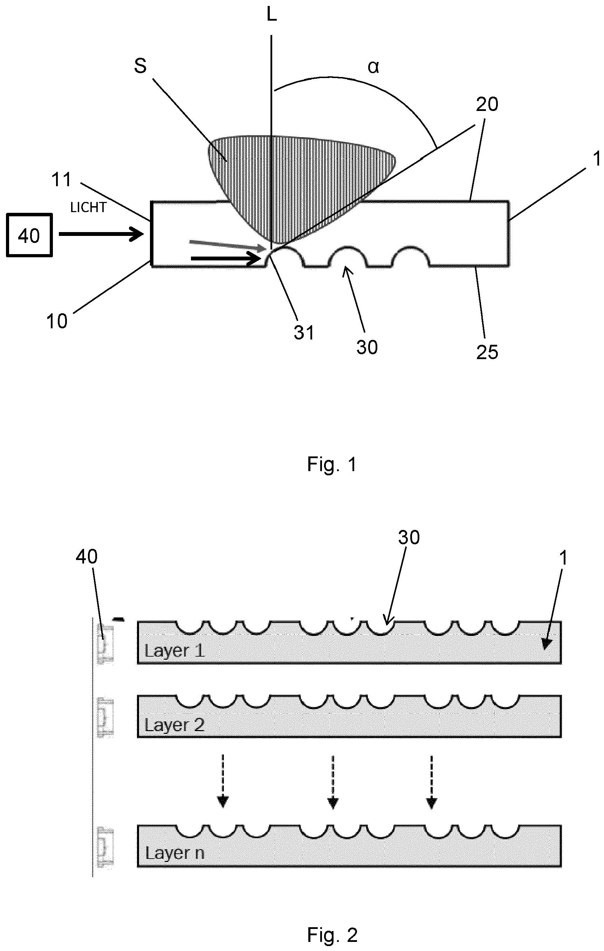

Im Folgenden wird die Erfindung anhand einer beispielhaften Ausführungsform mit Bezug auf die Figuren 1 bis 4 näher beschrieben, wobei gleiche Bezugszeichen in den Figuren auf gleiche funktionale und/oder strukturelle Merkmale hinweisen.

Die Figur 1 zeigt eine schematische Darstellung bzw. eine schematische Prinzipskizze, die das Konzept der Erfindung mit einem Displaysubstrat 1 näher erläutert. Das Displaysubstrat 1 ist in einer schematioschen Schnittansicht gezeigt und stellt einen plattenförmigen Lichtleiter aus einem zumindest teiltransparenten Lichtleitmaterial dar. Der plattenförmige Lichtleiter besitzt an seiner Seitenkante 11 einen Lichteinkopplungsabschnitt 10 und eine Sichtfläche 20, die in der späteren Einbausituation einem Betrachter zugewandt ist.

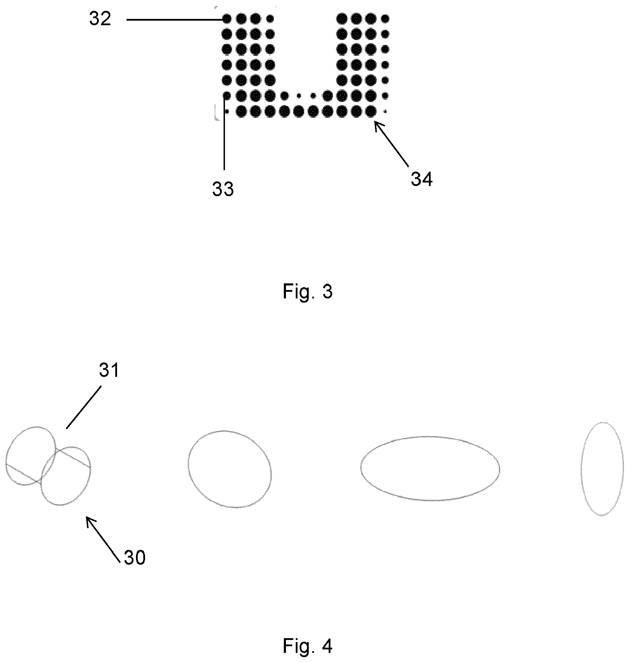

Die als Sichtfläche 20 ausgebildete Oberfläche dient dem Anzeigen eines bestimmten Symbols, Bildelementes und/oder eines Hinweise S. Zur Erzeugung eines Symbols S werden in den der Sichtfläche 20 gegenüberliegenden rückwärtigen Bereich 25 eine Vielzahl von Mikrostrukturformen 30 eingebracht, wie dies in der Figur 3 schematisch dargestellt ist.

Hierzu sind innerhalb einer klar abgegrenzten Kontur 34 eine Vielzahl von in Reihen 32 und Spalten 33 in die Oberfläche eingeformte Mikrostrukturformen 30 vorgesehen, die eine spezifische Form, wie zum Beispiel in der Figur 4 gezeigt, und zwar mit einer teilzylinderförmigen, elipsoidalen, (teil)-kugelförmigen, halbrunden oder tunnelförmigen Form mit wenigstens einer gebogenen Streufläche 31.

Entscheidend ist, dass die Mikrostrukturformen 30 zu mindestens jeweils eine zum Lichtweg im flachen Lichtleiter hin gebogene Streufläche 31 besitzen, die eine Teilfläche der Mikrostrukturform 30 ist.

Aufgrund der Brechungsverhältnisse an der Streufläche 31 wird das Licht (zumindest teilweise bzw. größtenteils) abgelenkt und zwar zur Sichtfläche 20 hin, wie dies in der Figur 1 schematisch gezeigt ist. Aufgrund der geometrisch gewählten Formen der Mikrostrukturformen 30 wird gezielt ein zu flachen Streuflächen vergleichsweise größerer Streuwinkel α erzielt. Dieser ist so gewählt, dass das aus der Oberfläche auf der Sichtseite 20 austretende gestreute Licht zur Anzeige des durch die Mikrostrukturelemente 30 erzeugten Symbols S somit unter einem Betrachtungswinkel α von bis zu 80° erkennbar ist.

Beim Betrachten der Sichtfläche 20 wird, je nachdem ob der plattenförmige Lichtleiter mittels Leuchtmittel 40 über den Lichteinkopplungsabschnitt 10 beleuchtet wird oder nicht, auf der Sichtfläche 20 unter dem Winkelbereich α relativ zur Lotrechten L der Oberfläche betrachtet, das Symbol, das Bildelement oder der Hinweise S dargestellt oder eben nicht dargestellt.

In der Figur 2 ist eine Anordnung von drei übereinander superpositionierten Displaysubstraten 1 gezeigt, mit denen sich je nach Einkopplung in ein Displaysubstrat 1 mit zum Beispiel einer Wellenlänge eine bestimmte Farbe des ansonsten gleichartigen Symbols darstellen lässt. Denkbar sind aber auch unterschiedliche überlagerte Symbole oder eben die Anzeige von Symbolen nebeneinander, wenn die Bereiche mit den Mikrostrukturformen 30 in der Ebene versetzt zueinander ausgebildet sind.

Das Einbringen der Mikrostrukturform 30 in die Oberfläche kann durch geeignete Abtragungsverfahren und Oberflächenbehandlungsverfahren geschehen. So wäre neben dem Laserabtragen auch die schichtweise chemische Ätzung denkbar.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So können z. B. auch andere geometrische Formen und Anordnungen genutzt werden, um die gewünschten Symbole darzustellen.

## Patentansprüche

1. Displaysubstrat (1) das als plattenförmiger Lichtleiter aus einem zumindest teiltransparenten Lichtleitmaterial ausgebildet ist und wobei der plattenförmiger Lichtleiter über einen Lichteinkopplungsabschnitt (10) und eine als Sichtfläche (20) ausgebildete Oberfläche zum Anzeigen eines bestimmten Symbols, Bildelementes und/oder eines Hinweise (S) verfügt, wobei hierzu in einem gegenüberliegend der Sichtfläche (20) rückwärtigen Bereich (25) eine Vielzahl von Mikrostrukturformen (30) in die Oberfläche im rückwärtigen Bereich (25) des Lichtleiters eingebracht sind, die jeweils in einer vorbestimmten geometrischen Größe, Form und Anordnung vorgesehen sind, so dass beim Betrachten der Sichtfläche (20) je nachdem ob der plattenförmige Lichtleiter mittels Leuchtmittel (40) über den Lichteinkopplungsabschnitt (10) beleuchtet wird oder nicht, auf der Sichtfläche (20) unter zumindest einem bestimmten Winkelbereich α relativ zur Lotrechten (L) der Oberfläche betrachtet, das Symbol, das Bildelement oder der Hinweise (S) dargestellt wird oder nicht.

2. Displaysubstrat (1) nach Anspruch 1, **dadurch gekennzeichnet, dass** im nicht über den Lichteinkopplungsabschnitt (10) beleuchteten Zustand des plattenförmigen Lichtleiters keine durch die Mikrostrukturformen (30) gebildete Strukturen oder Symbole auf der Sichtseite (20) durch einen Betrachter in jedwedem Betrachtungsabstand erkennbar sind.

3. Displaysubstrat (1) nach Anspruch 1 oder 2, **dadurch gekennzeichnet, dass** wenigstens eine Seitenkante (11) des plattenförmigen Lichtleiters als Lichteinkopplungsabschnitt (10) vorgesehen sind, um über wenigstens diese Seitenkante (11) Licht von einem Leuchtmittel (40) in den Lichtleiter einzukoppeln.

4. Displaysubstrat (1) nach einem der vorhergehenden Ansprüche, **dadurch gekennzeichnet, dass** die Mikrostrukturformen (30) jeweils eine entsprechend geformte und/oder orientierte Streufläche (31) ausbilden, um das vom Lichteinkopplungsabschnitt (10) eingekoppelte Licht bestimmungsgemäß in Richtung der Sichtfläche (20) abzulenken oder zu streuen, wobei die Form und/oder Orientierung der Streufläche (31) dabei so gewählt ist, dass das eingekoppelte Licht vorzugsweise unter einem bestimmten Winkel α gegenüber der Lotrechten (L) der Sichtseite (20) aus der Sichtseite (20) austritt.

5. Displaysubstrat (1) nach einem der vorhergehenden Ansprüche, **dadurch gekennzeichnet, dass** die Mikrostrukturformen (30) in einem vorbestimmtem, insbesondere symmetrischen Muster in Reihen (32) und/oder Spalten (33), vorzugsweise räumlich begrenzt durch die des anzuzeigenden Symbols definierte Außenkontur (34).

6. Displaysubstrat (1) nach einem der vorhergehenden Ansprüche, **dadurch gekennzeichnet, dass** die Mikrostrukturformen (30) als dreidimensionale Mikroausnehmungen in der der Sichtseite (20) gegenüberliegenden Rückseite (25) ausgebildet sind.

7. Displaysubstrat (1) nach einem der vorhergehenden Ansprüche, **dadurch gekennzeichnet, dass** die Mikrostrukturelemente (30) mit einer runden, halbrunden, teilzylinderförmigen, elipsoiden oder tunnelförmigen Form ausgebildet sind, die jeweils zumindest eine gegenüber dem Lichteinkopplungsabschnitt (10) im Wesentlichen gekrümmte, vorzugsweise mit einem festen Krümmungsradius gekrümmte Streufläche (31) ausbilden, an denen das eingekoppelte Licht jeweils in einen definierten Streuwinkel zur Sichtfläche (20) hin gestreut wird.

8. Displaysubstrat (1) nach Anspruch 7, **dadurch gekennzeichnet, dass** die jeweils wenigstens eine gekrümmte Streufläche ein Mantelflächenabschnitt eines Zylinders, einer Teilkugel oder einer Tunnelkuppel ist, der zu einer Streuung des Lichts aus der Oberfläche auf der Sichtseite (20) zur Anzeige des durch die Mikrostrukturelemente (30) erzeugten Symbols (S) unter einem Betrachtungswinkel α von bis zu 80° zur Lotrechten L erkennbar ist.

9. Displayanordnung (100) bestehend aus wenigstens zwei oder mehreren übereinander gestapelten Displaysubstraten (1) gemäß einem der vorhergehenden Ansprüche 1 bis 8, wobei die jeweils in dem Lichtleiter des betroffenen Displaysubstrats (1) ausgebildeten Mikrostrukturelemente (30) in einer spezifischen Anordnung vorgesehen sind, dass jeweils ein anderes, insbesondere auch aus mehreren Symbolen (S) überlagertes Symbol an der Sichtseite (20) des obersten Displaysubstrats (1) angezeigt werden kann, je nachdem welche der im Stapel angeordneten Displaysubstraten (1) beleuchtet wird.

10. Display umfassend ein Displaysubstrat (1) gemäß einem der vorhergehenden Ansprüche 1 bis 8 oder eine Displayanordnung (100) nach Anspruch 9.
